# EUROPEAN PATENT SPECIFICATION

(11) **EP 3 794 297 B1**
(45) Date of publication and mention of the grant of the patent: **12.04.2023**
(21) Application number: 19732468.4
(22) Date of filing: 16.05.2019
(51) Int. Cl.: F28D 1/03, F28D 20/02, A61G 11/00, A01K 41/02, B01L 1/02, C12M 1/00, F28D 20/00

(54) **INCUBATOR COMPRISING A PCM-BASED HEAT EXCHANGER**
INKUBATOR MIT EINEM PCM-BASIERTEN WÄRMETAUSCHER
INCUBATEUR COMPRENANT UN ÉCHANGEUR THERMIQUE À PCM

(30) Priority: 17.05.2018 WO PCT/IB2018/053457
(43) Date of publication of application: 24.03.2021
(73) Proprietor: ECOLE POLYTECHNIQUE FEDERALE DE LAUSANNE (EPFL), 1015 Lausanne (CH)
(72) Inventor: MICHAUD, Véronique, 1113 St-Saphorin-sur-Morges (CH); FUENTES VALENZUELA, Lucas, 4300 Waremme (BE); HAUSSENER, Sophia, 1004 Lausanne (CH); GANI, Matthieu, 1806 St-Legier (CH); ROULIN, Marc, 1006 Lausanne (CH); JODLOWSKI, Tomasz, 1024 Ecublens (CH)
(74) Representative: Grosfillier, Philippe
(86) International application number: PCT/IB2019/054074
(87) International publication number: WO 2019/220395

(56) References cited:
- WO-A1-2017/039437
- WO-A1-2017/167363
- DE-U1- 20 202 120
- FR-A1- 3 052 548
- GB-A- 2 098 870
- JP-A- S60 122 894
- US-A1- 2012 125 573
- US-A1- 2015 224 850

## Description

### Technical Field

The subject-matter described in the present disclosure relates to an incubator, such as an infant incubator, comprising a thermal energy storage unit exploiting a phase change material.

### Background of the Invention

Every year approximately 20 million babies are born prematurely, of which 4 million die. About 99% of these deaths occur in low and middle income countries and are primarily due to hypothermia, i.e. the inability to maintain the infant's body at a sufficiently warm temperature.

Normally, premature infants are kept in a neonatal incubator, whose central function is to ensure the maintenance of the appropriate body temperature for the infants, since their organs are not fully developed, and thus are incapable to maintain the necessary body temperature. In the developed world, incubators and radiant warmers have become an important part of NICUs (neonatal intensive care units). They provide a stable environment where temperature, humidity and oxygen content can be controlled.

The working principle of common incubators is to create a circulation of warm air in a partially enclosed compartment. The air is heated via a heater that is typically placed behind a fan which creates the flow. In some incubators, it is the other way round and the air is aspirated through the heater. The temperature of the air is regulated by a thermo-regulator placed inside the hood close to the baby and directly connected to the heater.

This medical innovation has helped lower substantially the number of deaths caused by hypothermia. However, a huge gap remains between medical advances in the developed world and their effective implementation in the global south. Among the main factors hindering a reliable and robust access to those technologies, in addition to the lack of funding, are the lack of trained personnel for monitoring and repair, as well as the broken supply chain that does not provide spare parts. Moreover, the major problem for the proper function of neonatal incubators in developing countries (whenever available) is the instability of electrical grids, which leads to frequent electric power cuts and thus compromising the ability for the incubators to maintain the infant body temperature at the desired physiological level. As a consequence, one cannot conceive aid as a mere translation of western technologies and inputs into low-resource countries. Appropriately tailored, bespoke solutions have to be conceived and implemented to bridge the gap that exists in health care as well as in other sectors. Therefore, there is an urgent need for a solution that enables neonatal incubators to ensure their vital function even during the frequent power interruptions. In order to be suitable for their intended context, such incubators should also be affordable, robust and easy to use.

An ideal candidate solution for the maintenance of a constant temperature in the absence of an electrically-driven heating source could be the use of phase change materials (PCMs). A PCM is usually (but not exclusively) a substance that undergoes a solid-liquid phase transition with a high latent heat of fusion. In other words, by melting and solidifying at a certain temperature, the PCM is capable of storing and releasing large amounts of energy. Heat is absorbed or released when the material changes from solid to liquid and vice versa; thus, PCMs are classified as latent heat storage units. In general, any material has a specific latent heat of fusion (and of vaporization). However, the specificity of commercial PCMs for heat storage/temperature maintenance purposes is that their latent heat of fusion (or heat storage capacity) is large compared to standard materials, and that they can be engineered to have their phase transition at a desired temperature.

Initially, solid-liquid PCMs behave like sensible heat storage (SHS) materials; their temperature rises as they absorb heat. When PCMs reach the temperature at which they change phase (their melting temperature), they absorb large amounts of heat at an almost constant temperature. The PCM continues to absorb heat without a significant rise in temperature until the material is entirely transformed into liquid phase. Once it is completely melted it behaves again like a sensible heat storage material, with its temperature rising proportionately to the energy it receives. When the ambient temperature around a liquid material falls, the PCM solidifies, releasing its stored latent heat to the adjacent environment at an almost constant temperature.

However, while PCMs display suitable heat storage and release features, what is missing in the art, in relation to e.g. neonatal incubator application, is an optimal interface that allows the extraction of heat from the PCM and its efficient and controlled distribution to the incubator interior.

Various solutions involving the use of a PCM as a heat storage element for the temperature maintenance of an ad-hoc container in disparate contexts have been proposed in the past. For example, WO 2012/002982 describes an incubator apparatus. Although this device demonstrates the possibility to use a PCM to maintain a constant temperature inside a confined space, the requirements of an infant incubator are dramatically different. The hood must be large enough to accommodate a new-born infant, it must be transparent to allow visual monitoring of the baby, and it must provide direct access to the baby for medical care, which prevents a thorough insulation.

Turning to means for preventing hypothermia in a baby, WO 2009/139877 describes an infant warmer comprising a bedding element that is configured to enclose at least a part of a living being and a temperature or thermal regulation element included in the bedding element comprising a phase change material which changes between a liquid phase and a solid phase within the desired temperature range. This element is separable from the system and can be completely removed from the bedding element to allow reheating. The temperature of the bedding element is however fixed and cannot be adjusted to accommodate different infant statuses and needs. The system furthermore neither provides constant visual monitoring of the baby's body nor access to it for medical care, and thus cannot be regarded as an infant incubator.

With respect to more complete solutions for infant incubators, many documents describe apparatuses that work by exploiting the features of a phase change material for regulating the temperature inside a hood/chamber even in the absence of electrical current. For instance, WO 2010/078395 discloses a modular neonatal intensive care system including an infant incubator, bassinet and frame. The infant incubator is configured so as to reduce the overall cost and/or minimizing the amount of power that the neonatal care system or infant incubator draws. In one aspect, incorporation of a phase change material (PCM) module for energy storage is envisioned: a brick of PCM can be placed inside the base of the incubator and can use the incoming AC electrical current to change from solid to liquid. When power is lost, the PCM brick releases heat as it changes from a liquid back to a solid. The brick maintains a constant temperature until the phase change is complete. This source of constant temperature provides a baseline for heating the incoming air, so that the electrical heating element draws energy from the battery only when needed to augment the PCM heat. This document, even if presenting the concept of using a PCM to store heat while electrical power is available and release it in the incubator during power failures, does not however describe any implementation of this function, and in particular how to efficiently retrieve the heat from the PCM, neither does it present any quantitative elements that would make this concept a realistic solution.

US 2012078034 describes an infant warming device comprising an infant enclosure defining an infant compartment, and a heating system pneumatically coupled with said infant compartment. The heating system includes a heater configured to selectively transfer heat to the infant compartment via a fan, and a thermal storage device configured to store heat from the heater and to selectively transfer said stored heat to the infant compartment. A list of thermal storage device materials include highly dense solids such as stone, masonry or metallic materials, liquids and/or phase change materials. In the thermal release mode, the thermal storage device is pneumatically coupled with the infant compartment via channels. The channels are respectively configured to transfer cooler air from the infant compartment to the thermal storage device, and warmer air from the thermal storage device to the infant compartment. The fan is pneumatically coupled with the channel to facilitate the transfer of heated air from the thermal storage device to the infant compartment.

Again, a description of the heat exchange process between the thermal storage unit and the environment or the air blown by the fan is lacking, as well as any quantitative assessment of the amount of heat that could or should be stored in order for the described device to be adapted to the context of developing countries, which is a crucial point when discussing heat storage using phase-change materials, since the necessary amount of material and the heat exchange procedure are non-trivial aspects in the implementation process.

International patent application WO 2017/167363, owned by the present Applicant, describes a PCM-based heat exchanger and its applications in an infant incubator according to the preamble of claim 1, wherein said heat exchanger has a base, a metallic heat exchanger having a plurality of hollow volumes defined by a network of metallic walls, a PCM included into the metallic heat exchanger so to fill the plurality of hollow volumes, and at least one metallic tubular element having an inlet, an outlet and a hollow body adapted to allow a fluid flow, operatively connected with the metallic heat exchanger, wherein each point of the PCM is at maximum 5 mm far from a wall of the network of metallic walls, the metallic heat exchanger or from the metallic tubular element. Even though the disclosed heat exchanger was a great step forward in the development of PCM-based incubators compared to what was known in the art, there is still room for improvements in terms of easiness and effectiveness of interfacing between an air flow and the phase change material in a thermal energy storage and release unit.

### Summary of the Invention

According to the invention, an incubator according to claim 1 comprising a PCM-based heat exchanger is disclosed, said PCM-based heat exchanger comprising:
a) a case having insulated walls comprising an inlet and an outlet; and
b) a plurality of modules comprising a support structure containing a PCM wherein said modules are arranged within said case in a way as to define a fluidic path connecting said inlet with said outlet.

An aspect of the subject-matter described in the present specification relates to the use of the PCM-based heat exchanger as previously described in an incubator, such as an infant, chicken or egg incubator, or a glove box.

Still another aspect of the subject-matter described in the present specification relates to an apparatus, wherein said apparatus is an incubator such as an infant, chicken or egg incubator, or a glove box, characterized in that it comprises:
a) an overall air inlet for fresh air and an outlet to evacuate carbon dioxide;
b) a hood defining an insulating compartment, said hood having an inlet and an outlet, and providing visual access to the content of the hood;
c) the PCM-based heat exchanger as previously described operatively connected, through its outlet, to the inlet of said hood;
d) a fan adapted for injecting an air flow into the inlet of the PCM-based heat exchanger; and
e) a system to regulate the air temperature inside the hood.

The above and other objects, features and advantages of the herein presented subject-matter will become more apparent from a study of the following description with reference to the attached figures showing some preferred aspects of said subject-matter.

### Brief description of the Figures

Figure 1 shows a top view of one aspect of the PCM-based heat exchanger according to the present invention;
Figure 2 shows a lateral cross section of a PCM-containing module according to two embodiments of the present invention: a) lateral cross section of a PCM-containing module having a support container encasing two layers of a phase change material; b) lateral cross section of a PCM-containing module having a support structure encasing two layers of a phase change material, each layer being included into a container such as a plastic bag;
Figure 3 shows an isometric view of one aspect of the PCM-containing module according to the present invention;
Figure 4 shows a top view of one aspect of the PCM-based heat exchanger according to the present invention operatively connected with a fan, in which an air flow is shown as arrows;
Figure 5 shows an isometric view of one aspect of the PCM-based heat exchanger comprising four PCM-containing modules;
Figure 6 shows a schematic lateral view of one aspect of an infant incubator including the PCM-based heat exchanger according to the present invention;
Figure 7 shows a schematic lateral view of another embodiment of the PCM-based heat exchanger according to the present invention comprising a plurality of PCM modules stacked in a horizontal layout. In the figure, the darker the arrows, the hotter the air.

### Detailed description of the Invention

The subject-matter herein described will be clarified in the following by means of the following description of those aspects which are depicted in the drawings. It is however to be understood that the subject matter described in this specification is not limited to the aspects described in the following and depicted in the drawings; to the contrary, the scope of the subject-matter herein described is defined by the claims. Moreover, it is to be understood that the specific conditions or parameters described and/or shown in the following are not limiting of the subject-matter herein described, and that the terminology used herein is for the purpose of describing particular aspects by way of example only and is not intended to be limiting.

As used herein and in the appended claims, the singular forms "a", "an" and "the" include plural referents unless the context clearly dictates otherwise. Also, the use of "or" means "and/or" unless stated otherwise. Similarly, "comprise", "comprises", "comprising", "include", "includes" and "including" are interchangeable and not intended to be limiting. It is to be further understood that where descriptions of various aspects use the term "comprising", those skilled in the art would understand that in some specific instances, an aspect can be alternatively described using language "consisting essentially of" or "consisting of."

Further, for the sake of clarity, the use of the term "about" is herein intended to encompass a variation of +/- 10% of a given value.

The present disclosure describes a thermal energy storage and release unit based on a phase change material, as well as a system comprising said unit with additional elements set in a functional interface, particularly designed to be applied in articles such as an (infant) incubator or a glove box. Of course, these applications should not be construed as limiting and others are possible as well. Said thermal battery unit comprises a PCM-based heat exchanger optimized to maintain a constant temperature inside an incubation hood for the duration of unexpected power failures encountered in developing countries which can typically last for up to four hours. Many PCM-based solutions for heat storage and/or temperature maintenance have been previously proposed, but none of them have been actually implemented in a commercially producible heat exchanger, particularly for use in an infant incubator, having limited dimensions and weight.

Hence, one of the key aspect of the subject-matter herein disclosed relies on the realization of such a heat exchanger which can solve the problem of how to guarantee a thermal autonomy of e.g. at least four hours by efficiently retrieving thermal energy from a phase change material and maximizing the heat transfer from said phase change material to a working fluid such as air or directly by conduction to the infant in the case of an incubator.

In particular, in order to address and overcome the shortcomings of the previous attempts in the field at stake, one aim of the present invention was to provide an apparatus such as a glove box or an incubator, such as an infant, chicken or egg incubator, to be used in situations where a continuous electricity supply cannot be guaranteed, such as for instance in developing countries or refugee camps, and/or to perform its tasks without electricity for a sufficient amount of time (e.g. at least 4 hours) to be transported from one place to another.

A further aim of the invention disclosed hereinafter was to provide a low-cost, reliable solution for an incubator, such as an infant, chicken or egg incubator, which minimizes the heat losses due to the typical non-hermetic sealing of its components while guaranteeing oxygen renewal and CO₂ elimination to allow an infant/chicken to breathe properly. All these aims are accomplished by the subject-matter as described in the present specification and in the appended claims.

As used herein, a "phase change material" (PCM) is a substance that absorbs and releases thermal energy during the processes of melting and freezing/solidification. When a PCM solidifies, it releases a large amount of energy in the form of latent heat at a relatively constant temperature. Conversely, when such material melts, it absorbs a large amount of heat from the environment. Latent heat represents the amount of energy required to change matter from one state to another, i.e. liquid to solid or vice versa. PCMs find their use in a broad range of applications, such as e.g. in refrigerators, high-performance textiles, shipping containers, construction material and many others.

PCMs fall into four main categories: water-based, salt hydrates, paraffins and vegetable-based. The selection criteria in a particular application are usually based on considerations like the thermodynamic properties (melting temperature in the desired operating temperature range, latent heat, density, thermal conductivity, volume changes), kinetic properties (nucleation rate, rate of crystal growth), chemical properties (chemical stability, complete reversible freeze/melt cycle, no degradation after a large number of freeze/melt cycle, non-corrosiveness, non-toxicity, non-flammability and non- explosiveness) or economic properties (cost, availability).

Even if a wide choice exists, in the frame of the present disclosure paraffin-based PCMs are considered the most suitable alternatives and are therefore preferred. The hydrated salts engender a lot of corrosion problem and using them inside a heat exchanger and an incubator, where a lot of different parts are metallic and the risk of having a leak can result in electrical problems, is preferably not advisable. Paraffins, together with a good heat storage capacity, also have a very low thermal conductivity, which can be considered as an advantage for continuous and slow heat retrieval in case of an electricity breakdown. However, as will be evident to a person skilled in the art, this choice is not exclusive and non-limiting as long as a PCM of choice is capable of storing heat in an efficient manner according to the present disclosure. In one aspect, a PCM according to the present disclosure has a phase transition temperature above 45 °C, such as comprised for instance between 50 and 100 °C, or between 50 and 70 °C, as measured by methods known in the art such as differential scanning calorimetry (DSC). This temperature range is considered to be advantageous in the frame of the use of the heat exchanger as a thermal battery within an apparatus such as an infant/chicken/egg incubator or a glove box, as will be detailed later on, in such a way that, depending on the location and/or the design of the heat exchange element and/or a fluidic path within said apparatus, the highest desirable temperature inside a connected hood can be achieved.

The aspects of the PCM-based heat exchanger herein described have been conceived and tailored to solve some issues encountered in the past in terms of charging/discharging of a thermal battery, costs and handling/ transportation, to cite a few. Further, designing an independent unit easily interfaced with an apparatus such as an (infant) incubator was of paramount importance: this system should store energy as well as deliver steady thermal conditions when connected to electricity supply, and maintain them when power is lost. With this aim in mind, essential parameters governing temperature regulation within an incubator have been investigated in more details, bringing to a final model which defines the subject-matter of the present disclosure.

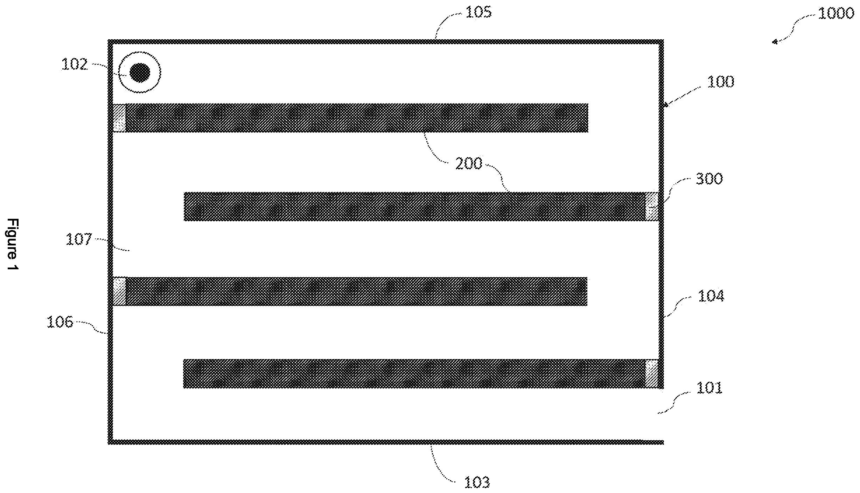

With reference to Figure 1, a top view of one, non-limiting aspect of the PCM-based heat exchanger **1000** herein disclosed is shown, schematically depicting a real-world, implemented thermal battery according to the present specification. The PCM-based heat exchanger comprises a case **100** having insulated walls (**103-106**) comprising an inlet **101** and an outlet **102**. The case **100** is adapted to work as a support and container for all the other components, and can have any three-dimensional shape such as cubic, rectangular prismatic, pyramidal, spherical or egg-like shape and so forth, and can be made of any material such as wood or plastic polymeric materials such as PET or polypropylene or even combinations thereof, as long as the case **100** properties are not altered (in terms of e.g. robustness) by the interaction with the other components of the system, for example due to the heating of certain of said components. Plastic polymeric materials are considered the preferred aspect according to the present invention in view of their good balance between the ease of manufacturing, the lightness, the robustness, the insulating properties and the low-cost.

The case **100** is shaped depending on several factors such as the dimensions of the other components or the dimensions of an apparatus using the same (e.g. a glove box or an -infant/chicken- incubator), the volume, size and/or shape of the PCM modules to be used (described herein below), the desired/expected manoeuvrability and so forth, and can be manufactured with any suitable method known in the art such as thermoforming, plastic injection, 3D printing and the like. In one aspect, the case **100** can comprise an easy access to the components included therein, for example by implementing a drawer. This can enable a user to e.g. put PCM modules in an oven for a fast heat of the PCM. Alternatively, a hot water circulation system around or inside the PCM module to re-melt the PCM modules can be envisaged and implemented.

In the shown aspect, the inlet **101** is shaped as a "corridor" opening created along one insulated wall (e.g. **104**) of the case **100**, and working as an access point for an air flow. Said corridor opening demarcates the initial portion of a fluidic path **107** defined on one side by an insulating wall **103** and on the other side by one PCM-containing module **200**; on the other hand, outlet **102** is shaped as a thru-hole spanning the thickness of the ceiling of the case **100**, not shown in Figure 1. Nonetheless, any other arrangement and/or design of either the inlet **101**, the outlet **102** or both is envisageable.

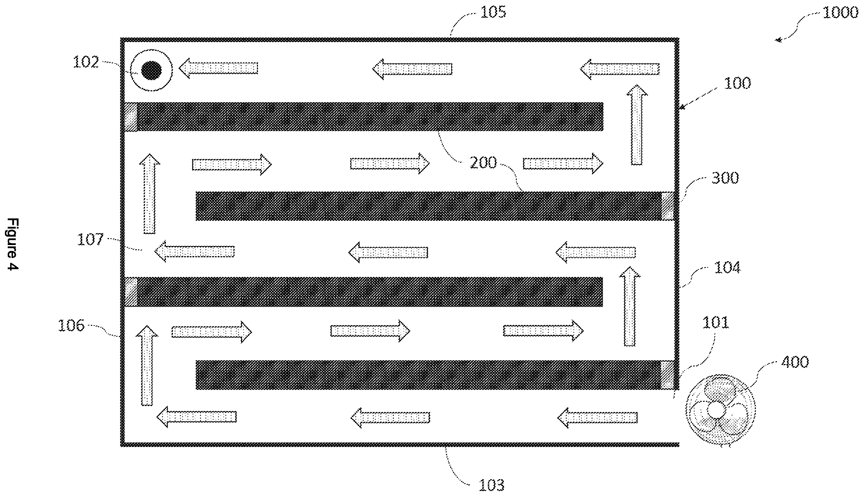

As anticipated, in its inner volume the case **100** comprises a plurality of PCM-containing modules **200**, arranged within said case **100** in a way as to define a fluidic path **107** connecting said inlet **101** with said outlet **102**. In one aspect according to the present disclosure, said fluidic path **107** can be a single, one way fluidic path **107**. For the sake of clarity, the wording "single, one way fluidic path" is used herein to intend a unidirectional, non-branched, canalizing path carrying or directing a fluid flow from at least one inlet to at least one outlet without or with minimal fluid dispersions. Said single, one way fluidic path **107** is defined, i.e. delimited, by the precise arrangement of the plurality of PCM-containing modules **200**. The single, one way fluidic path **107** can have several different shapes such as straight or convoluted ones; however, in order to maximize the length-to-area ratio (for having a long fluidic path in a limited heat exchanger volume), shapes like serpentines or spirals are the most suited. Also, the case **100** may be divided in levels in order to increase the length of the fluidic path in a same volume. For example, such levels may be created within a case **100** or by the use of several cases, for example piled one onto another (e.g. in series or in parallel), with connected outlets and inlets. Means such as a fan **400** (see figure 4) may be used to create the air flow in the case **100** and one may use additional means (such as fans) to maintain the flow in the levels.

One of the main features of the developed heat exchanger relies in its modular design, meaning the complete independency of each single PCM-containing module **200** from the others, both in terms of mechanical and of thermal relationships, which provides many advantages under a practical point of view. For instance, in case of malfunction, it offers the possibility to investigate and diagnose inside the battery, which would be very difficult with the other designs as they are built in one single block. If any PCM-containing module were to break down, this does not necessarily put the whole battery out of order as the other modules can take over the broken one at least for some time. Moreover, this arrangement provides an easy repair possibility as one should replace only one module. Those considerations are particularly important in the given context where repair and spare parts access can often be a major issue, such as in developing countries.

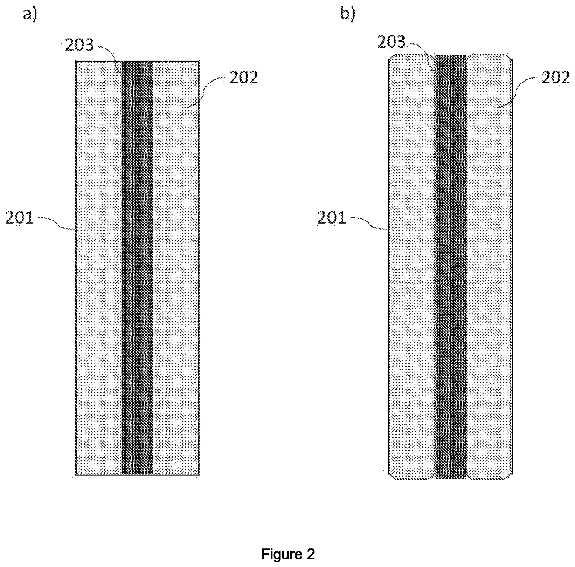

An exemplary PCM-containing module **200** according to one aspect of the present disclosure is depicted in Figure 2. As shown therein, a PCM-containing module **200** comprises a container structure **201** having a thickness w, a height h and a length I, said container **201** being filled with the phase change material **202** of choice. Independently from the shape of the container structure **201** of the module **200**, the PCM **202** is arranged within a module **200** in such a way to form at least one PCM layer having a thickness **w'** comprised between about 1 mm and about 10 mm, such as for instance 5 mm.

Again, the shape of a module **200** is not limiting, and the module can have in some aspects a cubic, rectangular prismatic, pyramidal, spherical or egg-like shape. However, in one aspect, the ratio between the thickness **w** and any other dimension (height **h** and/or length **l**, preferably height **h** and length **l**) of each of said PCM-containing modules **200** is less than 1. The rationale behind the choice of the present feature is linked to the existence of an air gap left because of volume contraction after the liquid-to-solid phase change of the PCM, also known as ullage space, which amounts to a thermally resistive air layer locally hindering heat transfer. However, if the modules **200** are designed in such a way that their thickness **w** is reduced, and they are placed vertically, this loss can be minimized.

For instance, in the aspect shown in Figure 1, four PCM-containing modules **200** having a rectangular prism shape are placed in parallel one close to the other inside a case **100** also having a rectangular prism shape, said modules being positioned so to have their longer axes parallel to the longer axis of the case **100**. Optional insulating elements **300** can be inserted to separate the modules **200** from the walls of the case **100**. The modules 200 are adapted to be placed with their thickness **w** dimension directed perpendicularly compared to the longer axis of the case **100**, their length **l** dimension directed in parallel compared to the longer axis of the case 100, and their height **h** dimension directed perpendicularly compared to the floor area of the case **100**.

Also, in the shown aspect said PCM-containing modules **200** have all the same volume, as well as the same size and shape. Of course, they may also have different shapes, sizes and volumes. Also, in one aspect as shown in Figure 1, the fluidic path **107** is a single, one way fluidic path **107** having a serpentine shape. Other shapes of fluidic path are of course not excluded in the frame of the present invention, for example a spiral or other equivalent. In such cases, the modules **200** may have another appropriate shape, for example a spiral. As indicated in the present specification, the examples given are illustrative embodiments that should be construed in a limiting manner.

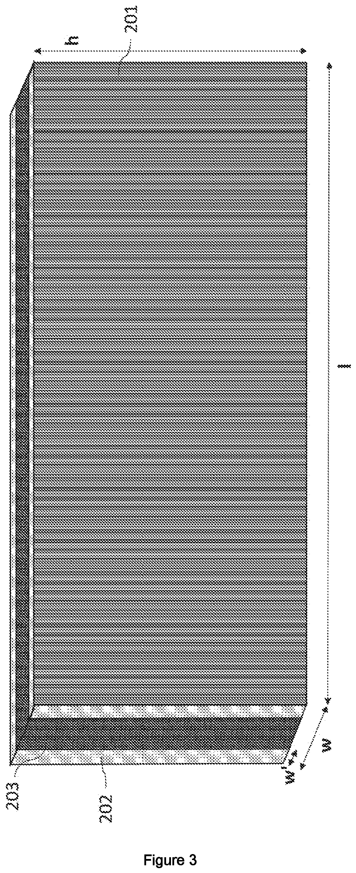

Including an efficient and quick method to melt the PCM and thus store energy in the PCM-based heat exchanger with presence of electricity is of paramount importance. Very long charging times usually witnessed in thermal storage units, which most often use air as both the charging and discharging fluid, are not suited to the context of a developing country. This suggests investigating alternative methods to load the battery. Accordingly, in one aspect each PCM-containing module **200** comprises a heating element **203** (see for instance Figures 2 and 3). Said heating element **203** can be provided, as a way of example, as a heating coil or an embedded element within the module **200** such as a heating mat; additionally or alternatively, the container/supporting structure **201** can include means for heating up the PCM within a PCM-containing module **200.**

As a way of example, schematically depicted in Figures 2 and 3, the PCM-based heat exchanger according to the present disclosure can have a length I spanning from about 50 to about 100 cm, a height h spanning from about 10 to about 50 cm and a width **w** spanning from about 5 to about 20 cm, such as for instance a length **l** of 70 cm, a height **h** of 30 cm and a width **w** of about 10 cm. Each module **200** comprises a support container **201** encasing two layers **202** of a paraffin-based phase change material, each layer **202** having a thickness **w**' spanning from about 0.2 to about 1 cm, such as of about 5 mm, and separated by a heating mat **203** of about 2 mm, so that each module **200** has for instance a thickness **w** of about 10 mm, a length **l** comprised between 45 and 65 cm, such as 50 cm, 55 cm or 60cm, and a height **h** of about 30 cm (Figure 2a). In an alternative aspect, each module **200** comprises a support structure **201** encasing two layers **202** of a paraffin-based phase change material included into a container such as a plastic bag (Figure 2b). The support container **201** can encapsulate the PCM layers **202** as depicted in Figure 2a, or can function as a physical support for PCM-filled plastic bags as in Figure 2b; in both cases, the support structure **201** comprises or substantially consists of a heat-transferring material with good thermal conductivity such as a metal or of a heat-transferring composite material. Metallic materials which can be used for the support structure **201** are for instance aluminium or copper. Since the heat exchanger rely on, among others, the heat conductivity of the support structure **201** for the heat transfer from a thermal storage element (a PCM) to a working fluid (e.g. air) and vice versa, certain parameters such as thermal conduction can be taken into account in its choice, as will be evident for a person skilled in the art. However, in an attempt to reduce or at least contain the costs, in conformity to the general spirit of the invention, also economic considerationsregarding the manufacturing processes, the material to be used, the material availability and so on shall be contemplated. For instance, in one aspect, an aluminium-based support structure **201** is used, which represents a good compromise in terms of heat exchange properties/price ratio.

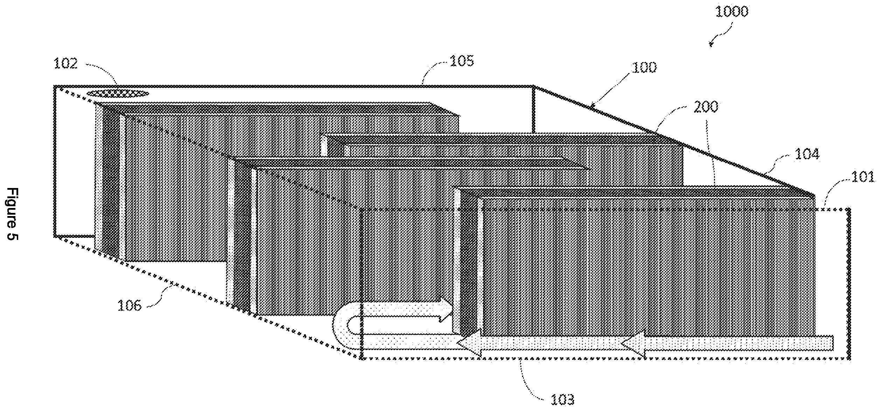

Turning back to the aspect depicted in Figure 1, the heat exchanger can be designed so that there is (on a cross section) a succession of e.g. 10 mm-wide longitudinal air ducts (forming a single, one way fluidic path **107**) and running in parallel between them and compared to the main axis of the heat exchanger, as well as a succession of e.g. 10 mm-thick PCM modules **200**. In the depicted aspect according to the present disclosure, five air ducts and four PCM modules **200** are arranged so to e.g. have an about 10 cm wide heat exchanger. The air flows between two PCM modules **200** at a time (except for the first and last parts where the air flows between one module **200** and the insulated walls **103** or **105**), so that the air flowing along the fluidic path **107** gets always in contact with an e.g. 5 mm thick layer of PCM **202** on each side, or with one layer of PCM and an insulated wall (Figures 4 and 5).

By making the air flow along several modules **200**, the actual air path **107** becomes very long (a few times the very length of one module **200**), such as for instance between about 1 and about 5 meters in length. Making those modules **200** longer increases the total heat exchange area which is a necessity for efficient heat exchanges. In addition, it could be envisaged to introduce local perturbations and roughness in the fluidic path **107** to make the air regime turbulent, or to reduce the air gap so to increase the convective heat transfer coefficient. Introduction of fins between modules is another possibility. Also, as mentioned above, separate levels may be formed in the case **100** to further increase the length of the fluidic path, for example.

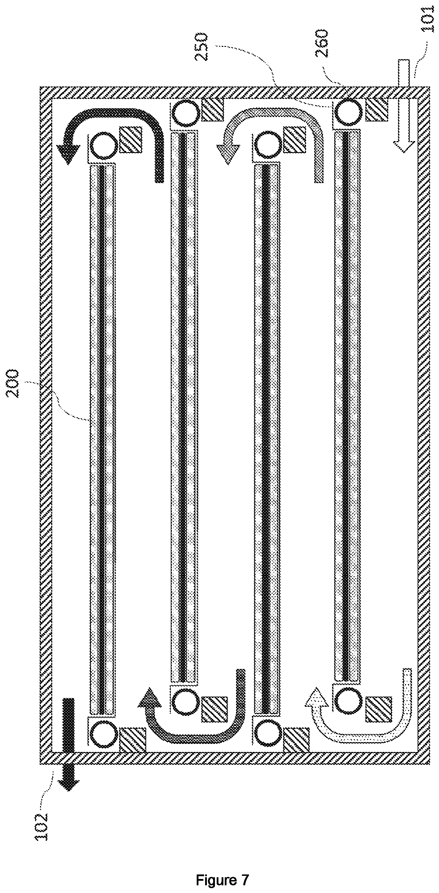

In an alternative embodiment, the PCM-based heat exchanger **1000** of the invention comprises a plurality of PCM-containing modules **200** distributed with a "horizontal layout". In particular, as depicted for instance on Figure 7, a plurality of PCM-containing modules **200** having a rectangular prism shape can be placed in parallel inside a case **100** stacked one above the other, the modules being positioned so to have their longer axes parallel to the longer axis of the case **100**. In this embodiment, as will be evident, the modules **200** are adapted to be placed with their thickness **w** dimension directed perpendicularly compared to the floor area of the case **100**, their height h dimension directed perpendicularly compared to the longer axis of the case **100**, and their length I dimension directed in parallel compared to the longer axis of the case **100**.

In this configuration, the requirements of the PCM encapsulation on one hand and of the shape or structure of the PCM modules on the other are split. In embodiments having a PCM-based heat exchanger **1000** with a "vertical layout", both aspects are inherently combined because of gravity: when the PCM melts it must be contained in a rigid structure to prevent it from forming a too thick block which would prevent a proper transfer of heat through the PCM the next time it crystallizes. With a horizontal layout, the structure of the PCM modules can be in the form of trays, boxes, cages and the like, while the PCM encapsulation itself can be either soft or hard. This gives more flexibility for the design and for the manufacturing and assembly processes (encapsulation solutions available on the market, appropriate materials for encapsulation vs. for structure).

In this embodiment, featuring PCM modules **200** comprising soft PCM-filled pouches placed in a metallic tray **250**, the issue of the insulating air layer that forms above the PCM **202** when it melts is further reduced or suppressed, if it is encapsulated in a rigid casing. The absence of lid or top cover above the PCM pouch allows the air to be heated to flow along the pouch even if the PCM level is slightly higher or lower due to the crystallization/melting status of the PCM.

The ergonomics of an infant incubator in general can be improved with this embodiment, and in particular access to the baby; this design also simplifies the manufacturing and assembly processes, making the incubator more realistic from an industrial point of view and more affordable.

Optionally, thermal insulation between the PCM modules **200** and the thermal battery casing **100** can be optimized with gaskets **260**, such as polymeric and/or elastomeric gaskets, thermally insulating each module **200** from the other and from the battery casing **100**.

In addition to the many technical key aspects as described, some other constraints must be kept in mind. The total price of the thermal battery should of course be limited as much as possible to make it a viable solution in resource-poor settings. In this regard, the choice of the materials, as well as the manufacturing methods, are studied to respond to this requirement.

Further, the maximum weight of the thermal storage unit must be kept as low as possible to allow easy handling and transportation. At the same time, the battery charging time should be kept at a minimum and not exceed the two hours, preferably one hour, while thermo-neutral environment should be maintained without electricity for a minimum duration of at least four hours. Accordingly, the PCM-based heat exchanger disclosed in the present specification has a limited weight compared to known solutions, such as below 50 kg, and limited dimensions that typically do not exceed the cubic meter of total volume.

Another object of the subject-matter described in the present specification relates to the use of the PCM-based heat exchanger as previously described in an apparatus like an incubator, such as an infant incubator, or a glove box.

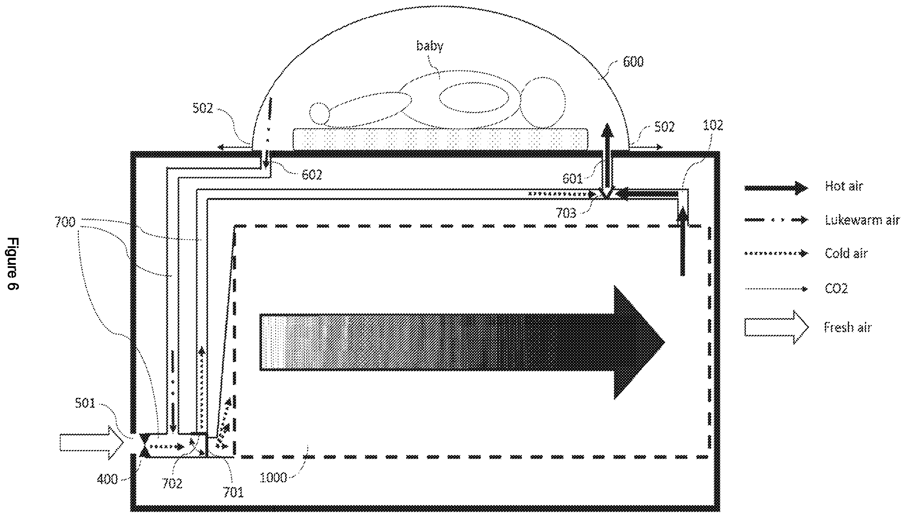

Accordingly, still another object of the subject-matter described in the present specification relates to an apparatus, wherein said apparatus is an incubator or a glove box, characterized in that it comprises (Figure 6):
a) an overall air inlet **501** for fresh air and an outlet **502** adapted to evacuate carbon dioxide;
b) a hood **600** defining an insulating compartment, said hood having an inlet **601** and an outlet **602**, and providing visual access to the content of the hood;
c) the PCM-based heat exchanger as previously described operatively connected, through its outlet **102**, to the inlet **601** of said hood **600**;
d) a fan **400** adapted for injecting an air flow into the inlet **101** of the PCM-based heat exchanger; and
e) a system **700** to regulate the air temperature inside the hood **600** (see for instance Figure 6).

As repeatedly stated along the present disclosure, the heat exchanger of the present invention has been conceived for applications related to an infant incubator. However, the main inventive concept behind the invention can be applicable to other kind of apparatuses as well, such as cell incubators, chicken/chicken eggs incubators or glove boxes, without departing from the spirit of the invention. For the sake of easiness and conciseness, however, reference to an "infant incubator" could be done thereafter to mean an apparatus according to the present invention, without being however limiting of the matter herein disclosed in any way.

Additional features necessary for the health or the monitoring of a baby can be included in the incubator. For example, temperature, humidity and gas (e.g. O₂ and/or CO₂) sensors can be operatively connected for instance to the hood 600 in order to monitor vital parameters of the infant and e.g. to avoid blindness in case there is too much O₂ or asphyxia if not enough O₂ is present. A phototherapy unit with blue LEDs to heal jaundice, as well as alarms in case of dysfunction of different parts of the incubator or air filtering systems, could also be incorporated in the final apparatus. However, all these aspects fall outside the scope of the present invention and will not be treated in details.

For the sake of clarity, the wording "operatively connected", "operatively connectable" or even "operatively connecting" is used herein and throughout the present disclosure to reflect a functional relationship between two or more components of a device or a system, that is, such a wording means the claimed components must be connected in a way to perform a designated function. The "designated function" can change depending on the different components involved in the connection; for instance, the designated function of outlet **102** operatively connected with the inlet **601** of a hood is to deliver a fluid flow from the PCM-based heat exchanger to said hood. A person skilled in the art would easily understand and figure out what are the designated functions of each and every component of the device or the system of the invention, as well as their correlations, on the basis of the present disclosure.

One aspect of said apparatus, embodied as an infant/chicken incubator, is schematically depicted in Figure 6. The hood **600** can have any shape and volume suitable for adapting an infant therein. It can be made of any material, but is preferably made of transparent or translucent plastic material(s) such as polypropylene, poly(methyl methacrylate) (PMMA) or the like so to facilitate manufacturing, reduce costs, allow visual access to its inside and at the same time provide a maximal thermal insulation to avoid waste of heat. The walls of the hood **600** may define hand holes to enable an operator to reach e.g. an infant in the case of an incubator or a biological sample in case of a glove box; additionally or alternatively, at least one access door can be implemented in order to e.g. facilitate the nursing care infant in the case of an incubator. In this context, sliding doors are more efficient than hinge doors regarding the thermal insulation and strength, and are therefore preferred. Moreover, the hood **600** can be double-walled in order to augment the efficiency regarding the incubator's heat loss, to reduce the oxygen consumption in the premature infant as well as his/her heat loss due to radiation. A small aeration structure **502** could be present at the bottom of the hood **600** in order to let pass the CO₂ (1.87 kg/m3) which is heavier than the O₂ (1.225 kg/m3).

The hood **600** is operatively connected with the PCM-based heat exchanger **1000** via the connection of the outlet **102** of the heat exchanger with the hood's inlet **601**. At the same time, the PCM-based heat exchanger **1000** is operatively connected through its inlet **101** with a fan **400** adapted for injecting an air flow within the heat exchanger, said fan **400** being power supplied by e.g. an embedded battery so to ensure a constant air flow independently from the availability of external electrical current.

The entire system is connected with a heater, or otherwise a suitable heating element, operatively disposed so to heat the airflow stemming from the fan **400**, the PCM **202** comprised within the PCM-containing modules **200**, or both. The heater can be placed for instance just after the fan **400** along the fluidic air path, such as between the fan **400** and the inlet 101 of the PCM-based heat exchanger **1000** so to heat the air flow. Preferably, as briefly stated elsewhere, a heating element can be provided as a heating coil, as an embedded element within the module **200** such as a heating mat **203**, or can be for instance placed on/in the container/supporting structure **201** of the PCM-containing modules **200**, as well as on/in the case **100** of the heat exchanger. Combinations of the foregoing alternatives are envisageable.

The apparatus disclosed in the present specification further comprises a system **700** to regulate the air temperature inside the hood **600**. Said system **700** can be imagined in several declinations, some of which are depicted for instance in Figure 6, which is however not limiting of the present disclosure. As a way of example, the system **700** can be designed to connect the hood's outlet **602** with the overall fresh air inlet **501** in a way as to mix fresh air with recycled air from the outlet **602** of the hood **600**, and injecting through the fan **400** this air flow into the inlet **101** of the PCM-based heat exchanger **1000**.

Additionally or alternatively, the system **700** to regulate the air temperature inside the hood **600** is adapted to vary the amount of fresh air coming from the overall fresh air inlet **501** and flowing into the PCM-based heat exchanger **1000**. This can be achieved through a valve/flap **701** adapted to direct air into the PCM-based heat exchanger **1000** depending on the needs and circumstances, and in a regulation feedback based on the air temperature inside the hood **600**. Additionally or alternatively, the system **700** to regulate the air temperature inside the hood **600** is adapted to vary the direction of the fresh air flow so to bypass the PCM-based heat exchanger **1000**. This can be achieved through a valve/flap **702** adapted to e.g. recirculate air coming from the hood **600** within the same.

Additionally or alternatively, the system **700** to regulate the air temperature inside the hood **600** is adapted to vary the proportion between the fresh air coming from the overall fresh air inlet **501** and the recycled air coming from the outlet **602** of the hood **600**, and flowing into the hood **600**. This can be achieved through a valve/flap **703** positioned in such a way to regulate the flow of recirculated air vis-à-vis hot air flowing into the hood 600 directly from the PCM-based heat exchanger **1000**.

The apparatus, e.g. the infant incubator, has two different working modes. When the heater as previously described is operating, the PCM **202** comprised within the modules **200** is heated so to reach the melting temperature. Contemporary, when the electrical current is available and the power is turned on, the fan **400** creates an air circulation such that the air is heated in contact with the heater; in this context, depending on the position of this latter and/or the needs, heated air can flow into the hood **600** through the PCM-based heat exchanger **1000**, the system **700** to regulate the air temperature, or both. Once heated, the PCM **202** contained in the modules **200** melts and the temperature in the PCM-containing modules **200** stays slightly above the PCM melting temperature.

As will be evident to a person skilled in the art, in the context of the use of the PCM-based heat exchanger **1000** according to the present disclosure in an incubator, some properties of the PCM are crucial and shall be taken into consideration. For instance, the operating temperature range of the air injected into an infant-holding, chicken-holding or egg-holding compartment **600** must be comprised between about 25 and 40°C. This aspect limits the final choice of the usable PCM material in this context: a PCM is chosen based on its phase transition temperature, which must be comprised in a range above the air operating temperature, taking into account the air cooling between the heat-exchanger and the incubator hood. According to a preferred aspect of the subject-matter of the present disclosure, the PCM **202** is a solid-to-liquid PCM having a phase transition temperature comprised between about 45°C and about 55°C so as to ensure that the hood can be heated up to 40°C even taking into account unavoidable heat losses in the air pathway from the heat exchanger **1000** to the hood **600**. Such solid-to-liquid PCMs are commercialized, for example, by Rubitherm Technologies GmbH, Germany.

The second mode is when an electrical breakdown occurs, which can be seen as when the power is turned off. In this situation, the fan **400** keeps running thanks to its independent (low energy) power supply. The air flows through the same loop(s), but is not heated by any heater. Once the air enters the PCM-based heat exchanger **1000**, it starts to be heated by the previously melted, liquid PCM **202**. The phase change of the PCM **202** towards its solidification starts, providing thermal energy to the incoming fresher air.

The process ends when all the PCM **202** is solidified which should take, in a preferred aspect, approximately 4 hours. This time can vary depending on several parameters, particularly the amount of heat losses from the heat exchanger **1000** and from the hood **600**, the mass of the PCM included in the modules **200** and/or the number of modules **200**, to cite a few. At the exit of the PCM-based heat exchanger **1000**, the air is at a temperature which permits to have the air inside the hood **600** at a precisely controlled temperature comprised between 32°C and 38°C, preferably around 37 °C, depending on the needs and circumstances.

For the thermal regulation, several different possibilities could be envisaged. For instance, as the PCM-based heat exchanger **1000** can provide a constant temperature, in some aspects regulating the temperature inside the hood **600** by mixing the hot air coming out of said PCM-based heat exchanger **1000** and fresh air directly coming from the fan **400** could be a more energy-convenient solution. Hot air and fresh air can be directly mixed inside the hood **600** or pre-mixed into an intermediate chamber operatively connected with the hood **600**.

Additionally or alternatively, the temperature in the hood **600** can be regulated via a thermoregulator which can tune the temperature by directly acting on the heater, on fresh air arrival and/or on the system **700** by opening/closing valves **701** to **703** in a suitable, feedback-loop fashion. As a way of example, if the temperature in the hood **600** is too high, the thermoregulator is activated so to e.g partially/completely close the PCM-based heat exchanger outlet **102** (the access to the hot air circulation) via the flap **703** and more fresh air will directly pass into the hood **600** by the coherent opening of valve **702** and closing of valve **701**. On the other hand, if the temperature in the hood **600** is too low, the fresh air circulation will be reduced by closing of valve **702**/opening of valve **701** and the switch of the flap **703** towards the opening of the outlet **102**. In this way, the temperature of the heater is not varied, and the thermal regulation system can be used when the power is turned on as well as when it is turned off. Another advantage of this regulation system is that the heater and the heat exchanger can stay at a constant temperature and the system is more reactive.

The present description is neither intended nor should it be construed as being representative of the full extent and scope of the present invention. The present invention is set forth in various levels of detail in the present specification as well as in the attached drawings and in the detailed description of the invention and no limitation as to the scope of the present invention is intended by either the inclusion or non inclusion of elements, components, etc... Additional aspects of the present invention have become more readily apparent from the detailed description above, particularly when taken together with the drawings.

In addition, exemplary embodiments have been described to provide an overall understanding of the principles of the structure, function, manufacture, and use of the systems and methods disclosed herein. One or more examples of these embodiments are illustrated in the accompanying drawings. Those skilled in the art will understand that the systems and methods specifically described herein and illustrated in the accompanying drawings are non-limiting exemplary embodiments and that the scope of the present invention is defined solely by the claims. The features illustrated or described in connection with one exemplary embodiment may be combined with the features of other embodiments. Such modifications and variations are intended to be included within the scope of the present invention. A number of problems with conventional methods and systems are noted herein and the methods and systems disclosed herein may address one or more of these problems. By describing these problems, no admission as to their knowledge in the art is intended. A person having ordinary skill in the art will appreciate that, although certain methods and systems are described herein, the scope of the present invention is not so limited. Moreover, while this invention has been described in conjunction with a number of embodiments, it is evident that many alternatives, modifications and variations would be or are apparent to those of ordinary skill in the applicable arts.

## Claims

1. An incubator, such as an infant incubator, a chicken incubator or a glove box comprising a PCM-based heat exchanger (**1000**) comprising:
a) a case (**100**) having insulated walls comprising an inlet (**101**) and an outlet (**102**); and
b) a plurality of modules (**200**) comprising a support structure (**201**) containing a PCM (**202**)
**characterised in that**
said modules (**200**) are arranged within said case (**100**) in a way as to define a single, one way fluidic path (**107**) connecting said inlet (**101**) with said outlet (**102**).

2. The incubator of claim 1, wherein said PCM is a paraffin-based PCM.

3. The incubator of claims 1 or 2, wherein said PCM has a phase transition temperature above 45 °C, preferably comprised between 50 and 100 °C.

4. The incubator of any previous claim, wherein the PCM (**202**) is arranged within the module (**200**) so to form at least one layer having a thickness **w'** comprised between about 1 mm and about 10 mm.

5. The incubator of any previous claim, wherein the ratio between the thickness and any other dimension of each of said PCM-containing modules (**200**) is less than 1.

6. The incubator of any previous claim, wherein said single, one way fluidic path (**107**) has a serpentine shape or a circular shape or another suitable shape.

7. The incubator of any previous claim, wherein said PCM-containing modules (**200**) have all the same volume or have different volumes.

8. The incubator of any previous claim, wherein said PCM-containing modules (200) have all the same size and/or shape or different sizes and/or shapes.

9. The incubator of any previous claim, wherein each PCM-containing module (**200**) comprises a heating element (**203**).

10. The incubator of any of claims 1 to 9 wherein said incubator is an infant incubator or a chicken incubator or a glove box.

11. An apparatus, wherein said apparatus is an incubator or a glove box as defined in one of the preceding claims, **characterized in that** it comprises:
a) an overall air inlet (**501**) for fresh air and an outlet (**502**) to evacuate carbon dioxide;
b) a hood (**600**) defining an insulating compartment, said hood having an inlet (**601**) and an outlet (**602**);
c) at least one said PCM-based heat exchanger (**1000**) operatively connected, through its outlet (**102**), to the inlet (**601**) of said hood;
d) a fan (**400**) adapted for injecting an air flow into the inlet (**101**) of the at least one PCM-based heat exchanger; and
e) a system (**700**) to regulate the air temperature inside the hood (**600**).

12. The apparatus of claim 11, wherein the system (**700**) is adapted to connect the hood's outlet (**602**) with the overall fresh air inlet (**501**) in a way as to mix fresh air with recycled air from the outlet (**602**) of the hood, and injecting through the fan (**400**) this air flow into the inlet (**101**) of the at least one said PCM-based heat exchanger (**1000**).

13. The apparatus of claims 11 or 12, wherein the system (**700**) to regulate the air temperature inside the hood (**600**) is adapted to vary the amount of fresh air coming from the overall fresh air inlet (**501**) and flowing into the at least one said PCM-based heat exchanger (**1000**).

14. The apparatus of any of claims 11 to 13, wherein the system (**700**) to regulate the air temperature inside the hood (**600**) is adapted to vary the direction of the fresh air flow so to bypass the at least one said PCM-based heat exchanger (**1000**).

15. The apparatus of any of claims 12 to 14, wherein the system (**700**) to regulate the air temperature inside the hood (**600**) is adapted to vary the proportion between the fresh air coming from the overall fresh air inlet (**501**) and the recycled air coming from the outlet (**602**) of the hood (**600**), and flowing into the hood (**600**).

## Patentansprüche

1. Inkubator, wie ein Säuglingsinkubator, ein Inkubator für Hühnereier oder ein Handschuhkasten, umfassend einen PCM-basierten Wärmetauscher (1000), umfassend:
a) ein Gehäuse (100) mit isolierten Wänden, das einen Einlass (101) und einen Auslass (102) umfasst, und
b) eine Vielzahl von Modulen (200), die eine Stützstruktur (201) umfassen, die ein PCM (202) enthält
**dadurch gekennzeichnet, dass**
die Module (200) im Inneren des Gehäuses (100) derart angeordnet sind, dass sie einen einzelnen Einwegfluidweg (107) definieren, der den Einlass (101) mit dem Auslass (102) verbindet.

2. Inkubator nach Anspruch 1, wobei das PCM ein Paraffin-basiertes PCM ist.

3. Inkubator nach Anspruch 1 oder 2, wobei das PCM eine Phasenübergangstemperatur von über 45°C, vorzugsweise zwischen 50 und 100°C aufweist.

4. Inkubator nach einem vorhergehenden Anspruch, wobei das PCM (202) im Inneren des Moduls (200) angeordnet ist, um mindestens eine Schicht mit einer Dicke w' zwischen etwa 1 mm und etwa 10 mm zu bilden.

5. Inkubator nach einem vorhergehenden Anspruch, wobei das Verhältnis zwischen der Dicke und jeder beliebigen anderen Abmessung eines jeden der PCMenthaltenden Module (200) kleiner als 1 ist.

6. Inkubator nach einem vorherigen Anspruch, wobei der einzelne Einwegfluidweg (107) eine Serpentinenform oder eine kreisförmige Form oder eine andere geeignete Form aufweist.

7. Inkubator nach einem vorhergehenden Anspruch, wobei die PCM-enthaltenen Module (200) alle dasselbe Volumen oder unterschiedliche Volumina aufweisen.

8. Inkubator nach einem vorhergehenden Anspruch, wobei die PCM-enthaltenen Module (200) alle dieselbe Größe und/oder Form und/oder unterschiedliche Größen und/oder Formen aufweisen.

9. Inkubator nach einem vorherigen Anspruch, wobei jedes PCM-enthaltene Modul (200) ein Heizelement (203) umfasst.

10. Inkubator nach einem der Ansprüche 1 bis 9, wobei der Inkubator ein Säuglingsinkubator oder ein Inkubator für Hühnereier oder ein Handschuhkasten ist.

11. Vorrichtung, wobei die Vorrichtung ein Inkubator oder ein Handschuhkasten nach einem der vorhergehenden Ansprüche ist, **dadurch gekennzeichnet, dass** er umfasst:
a) einen Gesamtlufteinlass (501) für Frischluft und einen Auslass (502) zum Abführen von Kohlendioxid;
b) eine Haube (600), die eine Isolierkammer definiert, wobei die Haube einen Einlass (601) und einen Auslass (602) aufweist;
c) mindestens einen PCM-basierten Wärmetauscher (1000), der durch seinen Auslass (102) funktional mit dem Einlass (601) der Kappe verbunden ist;
d) ein Gebläse (400), das zum Injizieren eines Luftstroms in den Einlass (101) des mindestens einen PCM-basierten Wärmetauschers angepasst ist; und
e) ein System (700), um die Lufttemperatur im Inneren der Kappe (600) zu regulieren.

12. Vorrichtung nach Anspruch 11, wobei das System (700) dazu angepasst ist, den Kappenauslass (602) mit dem Gesamtfrischlufteinlass (501) derart zu verbinden, dass die Frischluft mit der recycelten Luft aus dem Auslass (602) der Kappe gemischt wird, und diesen Luftstrom durch das Gebläse (400) in den Einlass (101) des mindestens einen PCM-basierten Wärmetauschers (1000) zu injizieren.

13. Vorrichtung nach Anspruch 11 oder 12, wobei das System (700), um die Lufttemperatur im Inneren der Kappe (600) zu regulieren, dazu angepasst ist, die Menge an Frischluft zu variieren, die von dem Gesamtfrischlufteinlass (501) kommt und in den mindestens einen PCM-basierten Wärmetauscher (1000) strömt.

14. Vorrichtung nach einem der Ansprüche 11 bis 13, wobei das System (700), um die Lufttemperatur im Inneren der Kappe (600) zu regulieren, dazu angepasst ist, die Richtung des Frischluftstroms zu variieren, um den mindestens einen PCM-basierten Wärmetauscher (1000) zu umgehen.

15. Vorrichtung nach einem der Ansprüche 12 bis 14, wobei das System (700), um die Lufttemperatur im Inneren der Kappe (600) zu regulieren, dazu angepasst ist, das Verhältnis zwischen Frischluft, die von dem Gesamtfrischlufteinlass (501) kommt, und der recycelten Luft, die von dem Auslass (602) der Kappe (600) kommt und in die Kappe (600) strömt, zu variieren.

## Revendications

1. Incubateur, tel qu'un incubateur pour nourrissons, un incubateur pour poulets ou une boîte à gants comprenant un échangeur de chaleur à base de MCP (1000), comprenant :
a) un boîtier (100) comportant des parois isolées comprenant une entrée (101) et une sortie (102) ; et
b) une pluralité de modules (200) comprenant une structure de support (201) contenant un MCP (202)
**caractérisé en ce que**
lesdits modules (200) sont agencés à l'intérieur dudit boîtier (100) de manière à définir un chemin fluidique unique unidirectionnel (107) reliant ladite entrée (101) à ladite sortie (102).

2. Incubateur selon la revendication 1, dans lequel ledit MCP est un MCP à base de paraffine.

3. Incubateur selon les revendications 1 ou 2, dans lequel ledit MCP a une température de transition de phase supérieure à 45 °C, de préférence comprise entre 50 et 100 °C.

4. Incubateur selon l'une quelconque revendication précédente, dans lequel le MCP (202) est agencé à l'intérieur du module (200) de manière à former au moins une couche ayant une épaisseur w' comprise entre environ 1 mm et environ 10 mm.

5. Incubateur selon l'une quelconque revendication précédente, dans lequel le rapport entre l'épaisseur et une quelconque autre dimension de chacun desdits modules contenant du MCP (200) est inférieur à 1.

6. Incubateur selon l'une quelconque revendication précédente, dans lequel ledit chemin fluidique unique (107) a une forme serpentine ou une forme circulaire ou une autre forme appropriée.

7. Incubateur selon l'une quelconque revendication précédente, dans lequel lesdits modules contenant du MCP (200) ont tous le même volume ou ont des volumes différents.

8. Incubateur selon l'une quelconque revendication précédente, dans lequel lesdits modules contenant du MCP (200) ont tous la même taille et/ou forme ou des tailles et/ou formes différentes.

9. Incubateur selon l'une quelconque revendication précédente, dans lequel chaque module contenant du MCP (200) comprend un élément chauffant (203).

10. Incubateur selon l'une quelconque des revendications 1 à 9 dans lequel ledit incubateur est un incubateur pour nourrissons ou un incubateur pour poulets ou une boîte à gants.

11. Appareil, dans lequel ledit appareil est un incubateur ou une boîte à gants tels que définis dans l'une des revendications précédentes, **caractérisé en ce qu'**il comprend :
a) une entrée générale d'air (501) pour l'air frais et une sortie (502) pour évacuer le dioxyde de carbone ;
b) une hotte (600) définissant un compartiment isolant, ladite hotte comportant une entrée (601) et une sortie (602) ;
c) au moins un dit échangeur de chaleur à base de MCP (1000) relié fonctionnellement, par le biais de sa sortie (102), à l'entrée (601) de ladite hotte ;
d) un ventilateur (400) conçu pour injecter un flux d'air dans l'entrée (101) de l'au moins un échangeur de chaleur à base de MCP ; et
e) un système (700) pour réguler la température de l'air à l'intérieur de la hotte (600).

12. Appareil selon la revendication 11, dans lequel le système (700) est conçu pour relier la sortie (602) de la hotte avec l'entrée globale d'air frais (501) de manière à mélanger l'air frais avec l'air recyclé provenant de la sortie (602) de la hotte, et à injecter à travers le ventilateur (400) ce flux d'air dans l'entrée (101) de l'au moins un dit échangeur de chaleur à base de MCP (1000).

13. Appareil selon les revendications 11 ou 12, dans lequel le système (700) pour réguler la température de l'air à l'intérieur de la hotte (600) est conçu pour faire varier la quantité d'air frais provenant de l'entrée globale d'air frais (501) et s'écoulant dans l'au moins un dit échangeur de chaleur à base de MCP (1000).

14. Appareil selon l'une quelconque des revendications 11 à 13, dans lequel le système (700) pour réguler la température de l'air à l'intérieur de la hotte (600) est conçu pour faire varier la direction du flux d'air frais de sorte à contourner l'au moins un dit échangeur de chaleur à base de MCP (1000).

15. Appareil selon l'une quelconque des revendications 12 à 14, dans lequel le système (700) pour réguler la température de l'air à l'intérieur de la hotte (600) est conçu pour faire varier la proportion entre l'air frais provenant de l'entrée globale d'air frais (501) et l'air recyclé provenant de la sortie (602) de la hotte (600), et s'écoulant dans la hotte (600).
